# EUROPÄISCHE PATENTANMELDUNG

(11) **EP 2 725 329 A1**
(43) Veröffentlichungstag der Anmeldung: **30.04.2014**
(21) Anmeldenummer: 12189986.8
(22) Anmeldetag: 25.10.2012
(51) Int. Cl.: G01F 3/22, G01F 15/06

(54) **Energieautarker Fluidzähler**

(71) Anmelder: Elster GmbH, 55252 Mainz-Kastel (DE)
(72) Erfinder: Temme, Guido, 49186 Bad Iburg (DE)
(74) Vertreter: Zenz

(57) **Zusammenfassung**

Ein Zähler für die Erfassung eines Durchflusses eines Fluids durch ein Gehäuse des Zählers, welches einen Fluideinlass und einen Fluidauslass aufweist.

In dem Zähler ist eine Wandlungseinrichtung zur Wandlung eines Teils der Strömungsenergie des durchströmenden Fluids in elektrische Energie angeordnet ist. Außerdem ist eine elektronische Zähleinrichtung vorgesehen, welche eine Zählgrösse in Abhängigkeit von dem durchströmenden Fluidvolumen erfasst. Die elektronische Zähleinrichtung ist mit der Wandlungseinrichtung gekoppelt und wird von der Wandlungseinrichtung mit elektrischer Energie gespeist.

Eine elektronische Anzeigeeinrichtung ist mit der Wandlungseinrichtung gekoppelt und wird von der Wandlungseinrichtung mit elektrischer Energie gespeist, wobei die Anzeigeeinrichtung als haltestabile elektronische Anzeige ausgebildet ist, welche ausschließlich bei Veränderung des Anzeigeinhalts elektrische Energie erfordert. Die Anzeige ist zur Darstellung der Zählgrösse mit der elektronischen Zähleinrichtung gekoppelt.

## Beschreibung

Die Erfindung betrifft einen Fluidzähler zur Erfassung und Zählung von Verbrauchsmengen von Gasen oder Flüssigkeiten. Insbesondere betrifft die Erfindung einen Fluidzähler, der vollständig oder weitgehend energieautark ist.

Viele herkömmliche Fluidzähler weisen Energieversorgungen in Gestalt eines Versorgungsanschlusses oder eines Energiespeichers, beispielsweise einer Energiezelle oder Batterie auf.

Dies ist insbesondere bei Zählern erforderlich, deren Zählwerk mit elektronischen Komponenten versehen ist und die Zählinformationen zur elektronischen Auslesung bereitstellt. Bei fernablesbaren Geräten werden z.B. die bislang häufig eingesetzten rein mechanischen Zähler entweder mit sogenannten Absolutencoder-Zählwerken ausgestattet oder mit einem Impulsabgriff. Bei den Realisierungen mit Impulsabgriff liegt immer die Schwierigkeit vor, dass der Zählerstand per initialer Offsetjustierung angeglichen und durch anschließende Integration als Parallelregister zum tatsächlich angezeigten Zählerstand geführt wird. Die Offsetjustierung ist ein zusätzlicher Prozessschritt und die parallele Integration kann zu Differenzen zum tatsächlichen Zählerstand führen.

Absolutencoder-Zählwerke weisen diese Nachteile nicht auf, sind jedoch technisch aufwendiger und benötigen häufig zusätzliche elektronische Anzeigen um z.B. Statusinformationen anzuzeigen. Grundsätzlich ist es denkbar, die Kommunikationseinheit an einem Fluidzähler mit zeitweise bereitgestellter externer Energie zu versorgen, da ggf. auf Kommunikationsaktivitäten verzichtet werden kann, wenn nicht genügend Energie vorhanden ist. Bei Verbrauchszählern, die dem gesetzlichen Messwesen unterliegen ist jedoch jederzeit eine Funktion und Ablesbarkeit zu gewehrleisten. Da Zähler häufig an Orten angebracht werden, wo keine Energieversorgung zur Verfügung steht und weitestgehend wartungsfrei, also ohne Batteriewechsel betrieben werden sollen, ist ein energieautarker Zähler hier sehr hilfreich.

Die WO 2002/054022 schlägt zu diesem Zweck vor, einen selbstversorgenden Energiezähler zu verwenden.

Der dort vorgeschlagene Zähler soll aus der kinetischen Energie des durchströmenden Fluids sowohl die Energie zur Versorgung der elektronischen Komponenten als auch die Information über die zu zählende Menge des Fluids ableiten. Zu diesem Zweck werden elektrische Impulse aus der Energie erzeugt und die Versorgung der Komponenten zur Erfassung, der Speicherung oder der Bereitstellung der Messungen wird hiermit ebenfalls erzeugt.

In einem Ausführungsbeispiel kann eine solche Wandlung von kinetischer Energie in elektrische Energie durch Erzeugung eines rotierenden magnetischen Feldes und Kopplung des magnetischen Drehfeldes als Spannungsquelle erreicht werden.

Nachteilig an diesem System ist jedoch, dass ggf. eine externe Energiequelle zur Auslesung erforderlich ist, insbesondere in Situationen, wenn längere Zeit keine Durchflüsse gezählt worden sind. Die Koppelung eines weiteren mechanischen Zählwerks mit einem solchem Zähler ist nämlich eine weitere mechanische Strömungsbelastung durch das Zählwerk. Die elektrische Ausbeute eines solchen Systems ist dann unvorteilhaft, wenn zusätzlich die mechanische Verstellarbeit am mechanischen Zählwerk zu leisten ist. Der Fluidstrom darf nicht übermäßig durch einen Strömungswiderstand gebremst werden, da die Druckverluste in einem solchen System strengen Vorgaben unterliegen.

Aufgabe der Erfindung ist es daher, einen energieautonomen Zähler der eingangs genannten Art zu verbessern, so dass die Ablesung und Bereitstellung von Informationen erleichtert wird.

Erfindungsgemäß wird die Aufgabe gelöst, indem der Zähler mit einer elektronisch ansteuerbaren Zählanzeige versehen wird, die ausschließlich bei Zustandsänderungen einen Energiebedarf hat. Diesem Konzept liegt die Erkenntnis zugrunde, dass tatsächlich nur eine Zählung in einem Messzähler stattfinden braucht, wenn ein materieller Fluidstrom durch den Zähler stattfindet. Eine Energieversorgung zur Erfassung und Speicherung dieser Durchflussdaten ist also tatsächlich dann erforderlich, wenn auch kinetische Energie bereitgestellt ist. Energieverfügbarkeit und Energiebedarf fallen demnach bei einem selbstversorgten Verbrauchszähler immer zusammen.

Erfindungsgemäß weist der Zähler ein Gehäuse auf, welches das Fluid durchströmt und welches mit einem Fluideinlass und einem Fluidauslass ausgebildet ist.

In dem Zähler ist eine Wandlungseinrichtung zur Wandlung eines Teils der Strömungsenergie des durchströmenden Fluids in elektrische Energie angeordnet und eine elektronische Zähleinrichtung ist vorgesehen, welche eine Zählgrösse in Abhängigkeit von dem durchströmenden Fluidvolumen erfasst. Die elektronische Zähleinrichtung ist mit der Wandlungseinrichtung gekoppelt und wird von der Wandlungseinrichtung mit elektrischer Energie gespeist.

Eine elektronische Anzeigeeinrichtung ist vorgesehen, welche mit der Wandlungseinrichtung gekoppelt ist und von der Wandlungseinrichtung mit elektrischer Energie gespeist wird, wobei die Anzeigeeinrichtung als haltestabile elektronische Anzeige ausgebildet ist, welche ausschließlich bei Veränderung des Anzeigeinhalts elektrische Energie erfordert. Die Anzeige ist zur Darstellung der Zählgrösse mit der elektronischen Zähleinrichtung gekoppelt.

Die erfindungsgemäße Anzeige des Zählers ist also aus solchen Anzeigeelementen aufgebaut, welche die Anzeige aufrechterhalten, wenn kein Stromfluss zur Verfügung steht. Derartige Anzeigeeinrichtungen sind in verschiedener Gestaltung am Markt verfügbar, insbesondere gibt es zahlreiche Systeme, die auf sogenannter Elektrophorese basieren. Entsprechende Produkte sind beispielsweise bei elektrischen Lesegeräten, wie sogenannten EBook-Readern verfügbar.

Beispielsweise offenbart auch die US 4,126,854 ein Anzeigesystem, bei dem eine Mehrzahl von Teilchen in einer Anzeigetafel angeordnet ist, die eine elektrische Anisotropie aufgrund der halbkugelförmigen Oberflächenbeschichtung haben und eine charakteristische Verteilung in einem Volumen einer dielektrischen Flüssigkeit aufweisen. Unter Einwirkung eines elektrischen Feldes können die Teilchen entsprechend ihrer elektrischen Anisotropie gedreht werden, um Anzeigeelemente darzustellen. Die Anzeigeelemente können dann auch nach Wegnahme der Feldenergie in dieser Stellung verharren. Gemäß der US 4,143,103 können derartige Anzeigen hergestellt werden. Die Teilchen werden mit einer lichttransparenten Flüssigkeit gemischt, welche nachfolgend gehärtet wird. Mittels spezieller Verfahren werden dann Bewegungsräume um die Teilchen gebildet, in welchen sich diese gemäß einem elektrischen Feld drehen lassen.

Entsprechend werden solche aus dem Stand der Technik bekannten Anzeigen als Drehelementanzeigen bezeichnet. Oft sind die optischen einzelnen Elemente in einem festen Substrat eingebettet und in ihrer örtlichen Lage, nicht jedoch in ihrer Ausrichtung fixiert. Andere Ausführungsformen von solchen Drehelementanzeigen, auf welche hier ausführlich Bezug genommen wird, sind bekannt aus der EP 0 913 803, EP 0 942 405, EP 1 005 008 oder auch der EP 0 994 456.

Die erfindungsgemäße Kombination und Verwendung eines solchen Anzeigeelements mit einem eingangs genannten selbstversorgten Fluidzähler ist besonders vorteilhaft, da für den Zeitpunkt, in dem tatsächlich eine Anzeigeänderung erforderlich ist, auch die dafür erforderliche Energie zur Verfügung steht. Eine Änderung der Anzeige ist nur dann nötig, wenn tatsächlich Fluid durch den Zähler strömt und damit auch eine Energieversorgung des Zählwerks bereitstellt. Strömt kein Fluid bleibt die Anzeige in ihrem bisherigen Zustand und erlaubt jederzeit eine Ablesung am Zählgerät selbst.

Erfindungsgemäß wird daher das energieautonome Konzept der ursprünglich rein mechanischen Zähler auf elektronische Zähler übertragen, so dass jederzeit eine Ablesung möglich ist, auch wenn die letzte Durchströmung des Fluidzählers lange zurückliegt.

Ein Energieverbrauch während der zählfreien Zeit ist nicht vorhanden. Da das elektronische Display außerdem der Ansteuerung durch die elektronischen weiteren Komponenten und dem Zählwerkspeicher unterliegt, ist eine Manipulation über ein Anzeigeelement ausgeschlossen, da bei jeder Zustandsveränderung das Display erneut zur vollständigen Anzeige angesteuert wird.

Der Energiebedarf für einen Anzeigenwechsel ist erfahrungsgemäß äußerst gering, wie auch aus anderen Anwendungen des sogenannten E-Papers bekannt. Insbesondere hat eine solche Anzeige deutlich geringeren Energieverbrauch als Leuchtanzeigen oder LCD-Anzeigen.

Grundsätzlich kann ein derartiger Zähler auch mit einer Schnittstelle ausgestattet sein, die für Auslesevorgänge oder Wartungsvorgänge mit einer externen Einheit koppelbar ist, um zeitweise eine externe Stromversorgung zur Verfügung zu stellen. Dann kann die erfindungsgemäß angebrachte Anzeige zeitweise zur Anzeige von Statusmeldungen oder Wartungsinformationen oder Programmierinformationen genutzt werden. Alternativ kann auch eine weitere Anzeige zur Verfügung gestellt sein, die nur bei externer Stromversorgung aktiviert wird.

Welche Anzeigevorrichtung tatsächlich verwendet wird, ist beliebig, wesentlich ist, dass es eine solche Anzeige ist, die nur bei Änderungen des Anzeigeinhaltes einen Stromfluss erfordert und ansonsten den Bildinhalt beibehält, auch bei Wegnahme jeglicher Versorgungsspannung.

Auch die Art der Stromerzeugung aus dem Fluidfluss kann in der eingangs genannten Art und Weise, also wie in der WO 2002/054022 erfolgen. Alternative Gestaltungen sind aus dem Stand der Technik ebenfalls bekannt, beispielsweise aus der WO 2011/014187.

Wesentlich ist, dass die Kombination eines Anzeigesystems, insbesondere einer Drehelement-Anzeige mit einem derartigen Zähler zahlreiche Vorteile bietet, welche die Einsatzmöglichkeiten derartiger energieautarker Zähler deutlich verbessern.

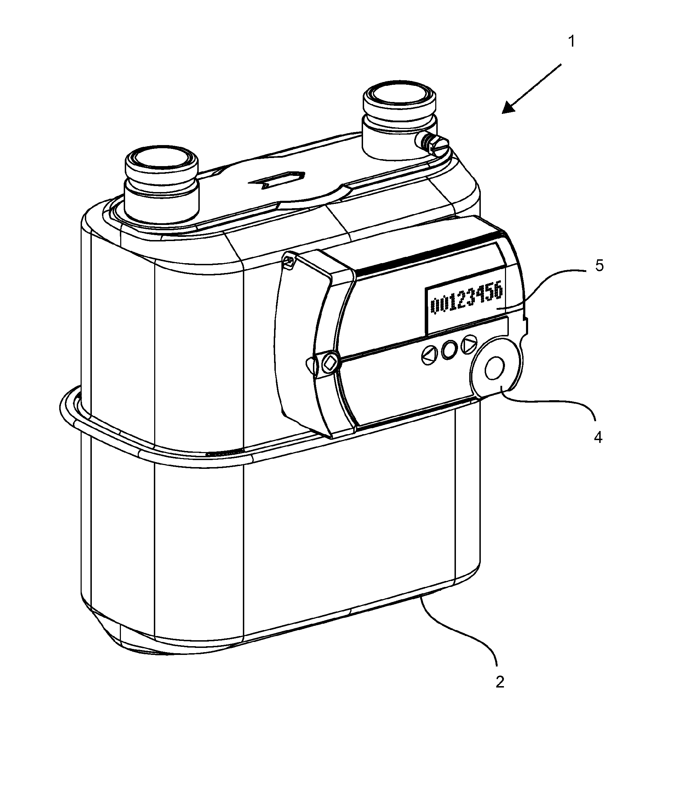

Fig. 1 zeigt eine exemplarische Darstellung eines erfindungsgemäßen Fluidzählers;

Der in Fig. 1 gezeigte Gaszähler 1 ist in der herkömmlichen Weise als Balgengaszähler ausgebildet. Durch Membranen voneinander getrennte Messkammern im Inneren des Gehäuses 2 werden periodisch gefüllt und entleert. Ein Gelenkgetriebe überträgt die Membranbewegung auf eine Kurbelwelle. Die Kurbelwelle treibt zwei Schieber an, die den Gasstrom steuern. Somit wird der Gasstrom wechselseitig durch einen Balg geleitet. Die Drehbewegung des Getriebes wird zur elektronischen Zählerfassung abgetastet. Dafür befindet sich im Innern des Gehäuses wenigstens ein Magnetfeldsensor. Außerdem ist, wie in der oben referenzierten Druckschrift, eine Einrichtung zur Erzeugung elektrischer Energie aus der mechanischen Bewegung vorgesehen. Diese Einrichtung versorgt das elektronische Zählwerk. Der Aufbau der vorstehend genannten Komponenten ist dem Stand der Technik an oben genannter Stelle zu entnehmen. Der Zähler ist als selbstversorgender, energieautarker Zähler ausgebildet.

Am Gehäuse ist neben Bedienelementen 4 eine Anzeige 5 vorgesehen. Diese Anzeige 5 ist als Anzeige auf Basis von elektronischem Papier ausgebildet. Die Anzeige wird von der elektrischen Energie gespeist, die aus der mechanischen Bewegung im Gehäuse gewonnen wird. Nach Wegfall der Versorgung bleibt bei dieser Anzeige jedoch der bestehende Zustand erhalten, ein angezeigter Zählerstand wird also weiterhin angezeigt.

Der Zähler ist auf diese Weise jederzeit in bequemer Weise ablesbar.

## Patentansprüche

1. Zähler für die Erfassung eines Durchflusses eines Fluids durch ein Gehäuse des Zählers, wobei das Gehäuse einen Fluideinlass und einen Fluidauslass aufweist,
wobei in dem Zähler eine Wandlungseinrichtung zur Wandlung eines Teils der Strömungsenergie des durchströmenden Fluids in elektrische Energie angeordnet ist und eine elektronische Zähleinrichtung vorgesehen ist, welche eine Zählgrösse in Abhängigkeit von dem durchströmenden Fluidvolumen erfasst,
wobei die elektronische Zähleinrichtung mit der Wandlungseinrichtung gekoppelt ist und von der Wandlungseinrichtung mit elektrischer Energie gespeist wird,
**dadurch gekennzeichnet,**
**dass** eine elektronische Anzeigeeinrichtung vorgesehen ist, welche mit der Wandlungseinrichtung gekoppelt ist und von der Wandlungseinrichtung mit elektrischer Energie gespeist wird, wobei die Anzeigeeinrichtung als haltestabile elektronische Anzeige ausgebildet ist, welche ausschließlich bei Veränderung des Anzeigeinhalts elektrische Energie erfordert,
wobei die Anzeige zur Darstellung der Zählgrösse mit der elektronischen Zähleinrichtung gekoppelt ist.

2. Zähler nach Anspruch 1, wobei die Anzeige als elektrophoretische Anzeige ausgebildet ist.

3. Zähler nach Anspruch 2, wobei die Anzeige als Drehelement-Anzeige ausgebildet ist.
